# EUROPÄISCHE PATENTANMELDUNG

(11) **EP 2 308 580 A1**
(43) Veröffentlichungstag der Anmeldung: **13.04.2011**
(21) Anmeldenummer: 10009205.5
(22) Anmeldetag: 04.09.2010
(51) Int. Cl.: B01D 46/00

(54) **Filteranordnung**

(30) Priorität: 06.10.2009 DE 102009048404
(71) Anmelder: Honeywell Technologies Sarl, 1180 Rolle (CH)
(72) Erfinder: Praat, Jos, Borger, Drenthe, 9531HA (NL)
(74) Vertreter: Sturm, Christoph

(57) **Zusammenfassung**

Die Erfindung betrifft eine Filteranordnung, insbesondere eine Feinstaubfilteranordnung, mit einem eine Filterkammer (12) begrenzenden Filtergehäuse (11), und mit einem einer vom Filtergehäuse (11) definierten Einlassöffnung (13) der Filterkammer (12) zugeordneten Filter (14), insbesondere einem Feinstaubfilter. Erfindungsgemäß ist der Filter (14) an seinen Rändern (16) mit dem Filtergehäuse (11) verschweißt.

## Beschreibung

Die Erfindung betrifft eine Filteranordnung, insbesondere eine Feinstaubfilteranordnung, nach dem Oberbegriff des Anspruchs 1. Des Weiteren betrifft die Erfindung ein Verfahren zur Herstellung einer Filteranordnung nach dem Oberbegriff des Anspruchs 12.

Aus der Praxis bekannte Feinstaubfilteranordnungen, mithilfe derer aus Luft Feinstaub gefiltert und das Eindringen von Feinstaub in eine von einem Filtergehäuse begrenzte Filterkammer, in welche die gefilterte Luft eintreten soll, minimiert werden kann, verfügen über einen Filter, der einer von dem Filtergehäuse definierten Einlassöffnung der Filterkammer zugeordnet ist. Dabei ist der Filter vorzugsweise in die Einlassöffnung der Filterkammer eingesetzt, wobei das Problem besteht, dass einerseits zwischen dem Filter und dem die Einlassöffnung definierenden Abschnitt des Filtergehäuses sowie andererseits über Ränder des Filters unerwünscht Feinstaub in die Filterkammer gelangen kann. Hierdurch wird die Effektivität der Filteranordnung herabgesetzt. Dies ist von Nachteil.

Der Erfindung liegt die Aufgabe zu Grunde, eine neuartige Filteranordnung mit einer erhöhten Effektivität zu schaffen.

Diese Aufgabe wird durch eine Filteranordnung mit den Merkmalen des Anspruchs 1 gelöst. Erfindungsgemäß ist der Filter an seinen Rändern mit dem Filtergehäuse verschweißt.

Erfindungsgemäß wird vorgeschlagen, dass der Filter an seinen Rändern mit dem Filtergehäuse gasdicht bzw. luftdicht verschweißt ist. Hierdurch kann vermieden werden, dass sich eine unerwünschte Luftströmung zwischen dem Filter und dem Filtergehäuse ausbildet, über die zum Beispiel Feinstaub in die Filterkammer gelangen kann. Hierdurch ist es möglich die Effektivität der Filteranordnung zu steigern.

Nach einer vorteilhaften Weiterbildung der Erfindung ist der Filter an seinen Rändern selbst verschweißt. Dann, wenn der Filter an seinen Rändern selbst gasdicht bzw. luftdicht verschweißt ist, kann zusätzlich eine unerwünschte Luftströmung über die Ränder des Filters selbst unterbunden werden, sodass auch über die Ränder des Filters insbesondere kein Feinstaub in die Filterkammer gelangt. Hierdurch kann die Effektivität der Filteranordnung weiter gesteigert werden.

Vorzugsweise ist der Filter aus Kunststoff, insbesondere aus ein Filtergewebe bereitstellenden Kunststoff-Fasern, gefertigt, wobei das Filtergehäuse zumindest im Bereich von die Einlassöffnung definierenden Abschnitten, mit denen der Filter an seinen Rändern verschweißt ist, ebenfalls aus Kunststoff gefertigt ist, nämlich aus dem gleichen Kunststoff wie der Filter, und wobei der Filter an seinen Rändern mit den die Einlassöffnung definierenden Abschnitten des Filtergehäuses bevorzugt über eine Ultraschallverschweißung gasdicht bzw. luftdicht kunststoffverschweißt ist.

Das erfindungsgemäße Verfahren zur Herstellung einer Filteranordnung ist in Anspruch 12 definiert.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:

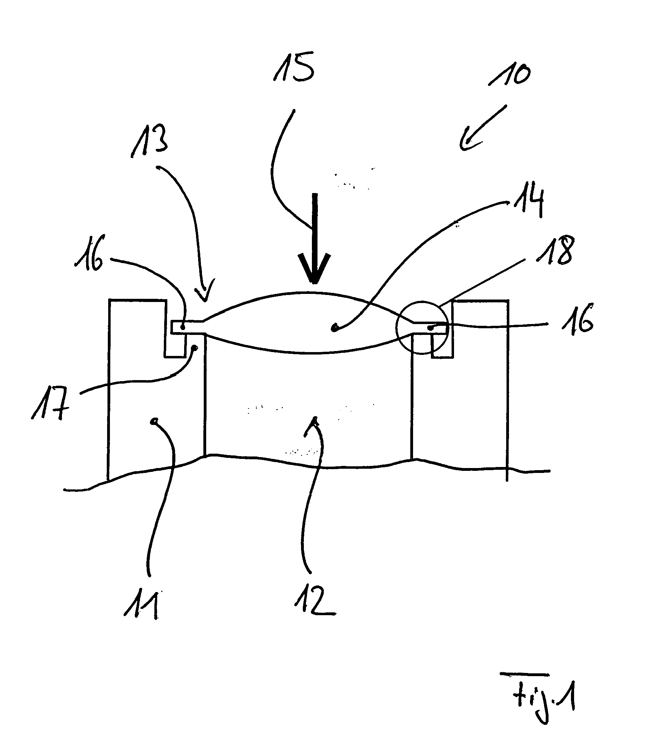

- Fig. 1:: eine schematisierte Darstellung einer erfindungsgemäßen Filteranordnung.

Fig. 1 zeigt eine stark schematisierte Darstellung einer Filteranordnung 10, die ein Filtergehäuse 11 umfasst, welches eine Filterkammer 12 definiert. Das Filtergehäuse 11 definiert eine Einlassöffnung 13 der Filterkammer 12, wobei der Einlassöffnung 13 ein Filter 14 zugeordnet ist.

Bei in Fig. 1 gezeigten Filteranordnung 10 handelt es sich um eine Feinstaubfilteranordnung, weshalb der Filter 14 als Feinstaubfilter ausgebildet ist, mithilfe dessen aus einer Luftströmung 15 Feinstaub heraus gefiltert werden kann, um das Einbringen von Feinstaub in die Filterkammer 12 zu unterbinden.

Erfindungsgemäß ist der Filter 14 an seinen Rändern 16 mit dem Filtergehäuse 11 gasdicht bzw. luftdicht verschweißt, nämlich mit Abschnitten 17 des Filtergehäuses 11, welche die Einlassöffnung 13 der Filterkammer 12 definieren. Durch das Verschweißen des Filters 14 an seinen Rändern 16 mit den die Einlassöffnung 13 definierenden Abschnitten 17 des Filtergehäuses 11 kann eine unerwünschte Luftströmung zwischen dem Filter 14 und dem Filtergehäuse 11, nämlich den Rändern 16 des Filters 14 und den Abschnitten 17 des Filtergehäuses 11, unterbunden werden, sodass sich zwischen dem Filter 14 und Gehäuse 11 keine Luftströmung ausbilden kann, über die Feinstaub in die Filterkammer 12 gelangen kann. Wie bereits erwähnt, ist der Filter 14 mit dem Gehäuse 11 gasdicht bzw. luftdicht verschweißt.

Zusätzlich ist der Filter 14 an seinen Rändern 16 selbst gasdicht bzw. luftdicht verschweißt, um so eine unerwünschte Luftströmung über die Ränder 16 des Filters 14 in die Filterkammer 12 hinein zu unterbinden. Auf diese Art und Weise kann sichergestellt werden, dass über die Ränder 16 des Filters 14 sich keine Strömung ausbildet, sodass auch über die Ränder 16 kein Feinstaub in die Filterkammer 12 gelangen kann.

Die Luftströmung 15 kann demnach nur in einem mittleren Bereich des Filters 14 denselben durchdringen, in welchem der Filter 14 eine Dicke aufweist, die eine effektive Filterung des Feinstaubs aus der Luftströmung 15 ermöglicht.

Der Filter 14 ist vorzugsweise aus Kunststoff, insbesondere aus Kunststoff-Fasern, gebildet. Das Filtergehäuse 11, nämlich zumindest die Abschnitte 17, an welchen der Filter 14 über seine Ränder 16 mit dem Filtergehäuse 11 verschweißt ist, ist aus dem gleichen Kunststoff gefertigt wie der Filter, insbesondere wie die Kunststoff-Fasern des Filters 14.

Die Kunststoff-Fasern des Filters 14 sind vorzugsweise als Polyamid-Fasern ausgeführt. Besonders bevorzugt sind die Kunststoff-Fasern des Filters 14 aus Polycaprolactam bzw. PA 6 gefertigt. Ebenso ist das Filtergehäuse 11 zumindest im Bereich seiner Abschnitte 17 aus Polyamid, insbesondere aus Polycaprolactam bzw. PA 6, gefertigt.

Der Filter 14 aus Kunststoff, insbesondere die Kunststoff-Fasern des Filters 14, ist bzw. sind an Rändern 16 des Filters 14 mit dem Filtergehäuse 11 aus Kunststoff, nämlich den Abschnitten 17 desselben, über eine Ultraschallverschweißung gasdicht bzw. luftdicht verschweißt, also kunststoffverschweißt. Ebenso ist bzw. sind der Filter 14, insbesondere die Kunststoff-Fasern des Filters 14, an den Rändern 16 des Filters 14 selbst über eine Ultraschallverschweißung gasdicht bzw. luftdicht verschweißt, also kunststoffverschweißt.

Die Ultraschallverschweißung erfolgt dabei mithilfe einer Sonotrode, die mit einer solchen Frequenz angeregt wird, dass der Filter 14 im Bereich seiner Ränder 16 einerseits selbst und andererseits mit den Abschnitten 17 des Filtergehäuses 11 gasdicht kunststoffverschweißt, um so die Gasdichtheit im Bereich der Ränder 16 des Filters 14 sowie die Gasdichtheit zwischen den Rändern 16 des Filters 14 und den Abschnitten 17 des Filtergehäuses 11 bereitzustellen. Die Kunststoff-Fasern des Filters 14, die vorzugsweise als Polyamid-Fasern, insbesondere als Polycaprolactam-Fasern ausgeführt sind, bilden vorzugsweise ein Filtergewebe aus, welches an unverschweißten Abschnitten eine Dicke zwischen 10 mm und 15 mm aufweist.

Es liegt demnach im Sinne der hier vorliegenden Erfindung, eine Feinstaubfilteranordnung vorzuschlagen, die über einen Filter 14 und ein Filtergehäuse 11 verfügt, wobei der Filter 14 an seinen Rändern 16 mit Abschnitten 17 des Filtergehäuses 11 gasdicht bzw. luftdicht verschweißt ist, und wobei die Ränder 16 des Filters 14 selbst gasdicht verschweißt bzw. luftdicht sind. Auf diese Art und Weise kann sichergestellt werden, dass in dem in Fig. 1 durch einen Kreis 18 umrandeten Bereich sich keine Strömung ausbildet, sodass dann über diesen Bereich 18 kein Feinstaub ungewollt in die Filterkammer 12 gelangen kann.

Eine Luftströmung 15 kann demnach nur dann in die Filterkammer 12 gelangen, wenn diese den Filter 14 in dem Bereich durchdringt, in welchem derselbe eine Dicke aufweist, die eine effektive Feinstaubfilterung ermöglicht. Ein unerwünschtes Einbringen von Feinstaub über die Ränder 16 des Filters 14 sowie über Spalte zwischen den Rändern 16 des Filters 14 und den Abschnitten 17 des Filtergehäuses 11 wird sicher, einfach und zuverlässig vermieden.

Zur Herstellung der erfindungsgemäßen Filteranordnung 10 werden zunächst das Filtergehäuse 11 sowie der Filter 14 bereitgestellt, wobei der Filter 14 an seinen Rändern 16 und über die Ränder 16 mit dem Filtergehäuse 11 über eine Ultraschallverschweißung unter Verwendung einer Sonotrode gasdicht bzw. luftdicht verschweißt wird. Filter 14 und Filtergehäuse 11 sind dabei aus dem gleichen Kunststoff gefertigt und daher kunststoffverschweißt.

### Bezugszeichenliste

- 10: Filteranordnung
- 11: Filtergehäuse
- 12: Filterkammer
- 13: Einlassöffnung
- 14: Filter
- 15: Luftströmung
- 16: Rand
- 17: Abschnitt
- 18: Bereich

## Patentansprüche

1. Filteranordnung, insbesondere Feinstaubfilteranordnung, mit einem eine Filterkammer (12) begrenzenden Filtergehäuse (11), und mit einem einer vom Filtergehäuse (11) definierten Einlassöffnung (13) der Filterkammer (12) zugeordneten Filter (14), insbesondere einem Feinstaubfilter, **dadurch gekennzeichnet, dass** der Filter (14) an seinen Rändern (16) mit dem Filtergehäuse (11) verschweißt ist.

2. Filteranordnung nach Anspruch 1, **dadurch gekennzeichnet, dass** der Filter (14) an seinen Rändern (16) derart mit dem Filtergehäuse (11) gasdicht bzw. luftdicht verschweißt ist, dass eine unerwünschte Strömung zwischen dem Filter (14) und dem Filtergehäuse (11) unterbunden wird.

3. Filteranordnung nach Anspruch 1 oder 2, **dadurch gekennzeichnet, dass** der Filter (14) an seinen Rändern (16) mit dem Filtergehäuse (11) im Bereich von die Einlassöffnung (13) definierenden Abschnitten (17) des Filtergehäuses (11) gasdicht bzw. luftdicht verschweißt ist.

4. Filteranordnung nach einem der Ansprüche 1 bis 3, **dadurch gekennzeichnet, dass** der Filter (14) an seinen Rändern (16) selbst verschweißt ist.

5. Filteranordnung nach Anspruch 4, **dadurch gekennzeichnet, dass** der Filter (14) an seinen Rändern (16) derart gasdicht bzw. luftdicht verschweißt ist, dass eine unerwünschte Strömung über die Ränder (16) des Filters (14) in denselben hinein unterbunden wird.

6. Filteranordnung nach einem der Ansprüche 1 bis 5, **dadurch gekennzeichnet, dass** der Filter (14) aus Kunststoff-Fasern, insbesondere aus Polyamid-Fasern, gebildet ist.

7. Filteranordnung nach Anspruch 6, **dadurch gekennzeichnet, dass** die Kunststoff-Fasern, insbesondere die Polyamid-Fasern, ein Filtergewebe ausbilden.

8. Filteranordnung nach Anspruch 7, **dadurch gekennzeichnet, dass** das Filtergewebe an unverschweißten Abschnitten eine Dicke zwischen 10 mm und 15 mm aufweist.

9. Filteranordnung nach einem der Ansprüche 1 bis 8, **dadurch gekennzeichnet, dass** das Filtergehäuse (11) zumindest im Bereich von die Einlassöffnung definierenden Abschnitten (17) aus Kunststoff, insbesondere aus Polyamid, gebildet ist.

10. Filteranordnung nach einem der Ansprüche 1 bis 9, **dadurch gekennzeichnet, dass** der Filter (14) und zumindest die Abschnitte des Filtergehäuses (11), mit denen der Filter (16) verschweißt ist, aus dem gleichen Kunststoff hergestellt sind.

11. Filteranordnung nach Anspruch 10, **dadurch gekennzeichnet, dass** der Filter (14) an seinen Rändern (16) mit dem Filtergehäuse (11) über eine Ultraschallverschweißung kunststoffverschweißt ist.

12. Verfahren zur Herstellung einer Filteranordnung, insbesondere einer Feinstaubfilteranordnung, nach einem oder mehreren der Ansprüche 1 bis 11, **dadurch gekennzeichnet, dass** der Filter an seinen Rändern mit dem Filtergehäuse verschweißt wird.

13. Verfahren nach Anspruch 12, **dadurch gekennzeichnet, dass** der Filter mit dem Filtergehäuse über eine Ultraschallverschweißung verschweißt wird.

14. Verfahren nach Anspruch 13, **dadurch gekennzeichnet, dass** der Filter mit dem Filtergehäuse mit Hilfe einer Sonotrode verschweißt wird.
